# EUROPEAN PATENT SPECIFICATION

(11) **EP 1 527 558 B1**
(45) Date of publication and mention of the grant of the patent: **17.12.2008**
(21) Application number: 03757154.4
(22) Date of filing: 04.06.2003
(51) Int. Cl.: H04L 12/28, H04L 12/54, H04J 3/26, H04J 3/22, H04J 3/16, H04J 3/24, H04J 3/00

(54) **SYSTEM AND METHOD FOR THE MULTICAST DISTRIBUTION OF MULTIMEDIA MESSAGING SERVICE MESSAGES**
SYSTEM UND VERFAHREN ZUR MULTICASTVERTEILUNG VON MMS-NACHRICHTEN
SYSTEME ET PROCEDE DE REPARTITION MULTIDESTINATION DE MESSAGES DE SERVICES DE MESSAGERIE MULTIMEDIA

(30) Priority: 06.06.2002 US 164787
(43) Date of publication of application: 04.05.2005
(73) Proprietor: Nokia Corporation, 02150 Espoo (FI)
(72) Inventor: PAILA, Toni, FIN-10160 Degerby (FI); SOINIO, Markku, FIN-02710 Espoo (FI)
(74) Representative: Read, Matthew Charles
(86) International application number: PCT/IB2003/002107
(87) International publication number: WO 2003/105385

(56) References cited:
- WO-A-99/49686
- US-A1- 2002 087 549
- US-A1- 2003 154 300
- TECHNICAL SPECIFICATION GROUP SERVICES AND SYSTEM ASPECTS: "TR 23.846 0.3.0: Multimedia Broadcast/Multicast Service; Architecture and Functional Description" 3RD GEBERATION PARTNERSHIP PROJECT, [Online] January 2002 (2002-01), XP002426520 Retrieved from the Internet: URL:http://www.3gpp.org/ftp/Specs/archive/ 23_series/23.846/23846-030.zip> [retrieved on 2007-03-26]

## Description

### Field of Invention

This invention relates to systems and methods for data distribution.

### Background Information

In recent years, there has been an increase in the use of wired and wireless networks to distribute data and/or provide services to devices such as wireless terminals, personal computers, and PDAs. One emerging network service is MMS (Multimedia Messaging Service). MMS, for example, allows users to send and receive messages including various types of content such as video, audio, and text.

There has been a good deal of interest in MMS, and the 3rd Generation Partnership Project (3GPP) has drafted specifications concerning this technology. Accordingly, there may be increased interest in technologies that may facilitate the use of network services such as MMS.

WO 99/49686 A2 discloses a system for the transmission of point-to-multipoint services. Data is sent from the services, addressed to devices within a geographical area indicated by a logical name. The prior system maps that logical name to one or more network element addresses to which the data is then forwarded.

### Summary of the Invention

According to a first aspect of the invention, a method for multicasting a message comprises receiving at a device a message directed towards a first address, determining a second address corresponding to said first address and multicasting said message to said second address, said message being a multimedia messaging service message, said first address being a particular services address and said second address being a multicast network address.

This aspect also provides a system for multicasting a message comprising a memory having program code stored therein and a processor operatively connected to said memory for carrying out instructions in accordance with said stored program code, wherein said program code, when executed by said processor causes said processor to perform the steps of receiving a message directed towards a first address, determining the a second address corresponding to said first address and multicasting said message to said multicast address, said message being a multimedia messaging service message, said first address being a particular services address and said second address being a multicast network address.

According to a second aspect of the invention, a method for receiving a multicasted multimedia messaging service message comprises determining, for each of one or more selected services addresses, a multicast address, receiving a message directed to at least one of the determined multicast addresses, ascertaining if said message is associated with at least one of the selected services addresses and, in the case where said message is ascertained to be associated with at least one of the selected services addresses, allowing said message to be consumed by a user.

This aspect also provides a system for receiving a multicasted multimedia messaging service message comprising a memory having program code stored therein and a processor operatively connected to said memory for carrying out instructions in accordance with said stored program code, wherein said program code, when executed by said processor, causes said processor to perform the steps of determining, for each of one or more selected services addresses, a multicast address, receiving a message directed to at least one of the determined multicast addresses, ascertaining if said message is associated with at least one of the selected services addresses and, in the case where said message is ascertained to be associated with at least one of the selected services addresses, allowing said message to be consumed by a user.

In this manner, there are provided systems and methods that employ multicast delivery techniques in the distribution of MMS (Multimedia Messaging Service) messages and/or systems and methods for receiving such messages.

### Brief Description of the Drawings

Fig. 1 shows an exemplary network arrangement according to embodiments of the present invention.
Fig. 2a is a flow chart showing steps involved in a first exemplary delivery method according to embodiments of the present invention.
Fig. 2b is a flow chart showing steps involved in a second exemplary delivery method according to embodiments of the present invention.
Fig. 2c is a flow chart showing steps involved in a third exemplary delivery method according to embodiments of the present invention.
Fig. 3 is a flow chart showing steps involved in messaging service selection and data reception according to embodiments of the present invention.
Fig. 4 is a flow chart showing steps involved in reception of a notification according to embodiments of the present invention.
Fig. 5 is a flow chart showing steps involved in reception of a MMS message according to embodiments of the present invention.
Fig. 6 shows an exemplary general purpose computer employable in various embodiments of the present invention.
Fig. 7 shows a functional block diagram of an exemplary terminal employable in various embodiments of the present invention.

### Detailed Description of the Invention

### General Operation

According to embodiments of the present invention, there are provided systems and methods for distributing MMS (multimedia messaging service) messages via multicast. More specifically, a messaging address, email address. MIN (Mobile Identification Number). MDN (Mobile Directory Number), unicast IP address, or the like may be associated with a multicast address such as an IP multicast address. Through this association, a MMS message addressed to such a messaging address, MIN, or the like could be delivered, in a multicast fashion, to all terminals that have adopted the corresponding multicast address and/or joined the corresponding multicast group. In certain embodiments, a messaging address, MIN, or the like so associated with a multicast address could be referred to as a "services address".

In certain embodiments, services addresses may be associated with messaging services. For example, the messaging address "sports@nokia.com" could be associated with a messaging service providing MMS messages comprising sports news, videos, images, and the like. The service provider offering the service could direct the messages to the services address "sports@nokia.com". The terminals of users interested in receiving the messages could be configured to subscribe to the messaging service by adopting the multicast address and/or joining the multicast group corresponding to the messaging address "sports@nokia.com". It is noted that, "Service provider", as used herein, may refer to an individual, company, computer or the like.

Embodiments of the invention provide one or more relay devices, each capable of acting as the initial recipient of messages directed towards one or more services addresses. In such embodiments, a services address could be the messaging address, MIN (Mobile Identification Number), MDN (Mobile Directory Number), unicast IP address, or the like assigned to and/or associated with a particular relay unit.

Upon receipt of a message, a relay device could dispatch the message via multicast, perhaps using multicast addressing, to the terminals subscribed to the messaging service corresponding to the services address to which the message was directed. More specifically, upon receipt of the message, the relay device could first act to determine the multicast address associated with the services address to which the message was directed. Next, the relay unit could perform multicast delivery of the message in accordance with the determined multicast address. The multicast delivery could be performed, for instance, using a unidirectional or bidirectional delivery method.

Embodiments of the present invention may be employed in number of different types of networks. For instance, embodiments may be employed in wired networks, wireless networks, and/or networks having both wired and wireless portions. Furthermore, embodiments may be employed in unidirectional networks, bidirectional networks, and/or networks having both unidirectional and bidirectional portions. Accordingly, embodiments of the present invention are applicable to, for example, the Internet and wireless networks employing DVB-T (terrestrial digital video broadcast), DVB-S (satellite digital video broadcast), DVB-C (cable digital video broadcast), DAB (digital audio broadcast), 802.11b, GPRS (general packet radio service), UMTS (universal mobile telecommunications service), DRM (digital radio mondiale) and/or Bluetooth.

It is specifically noted that more than one services address could be assigned to and/or associated with a particular relay unit. Thus, in the case where services addresses were in the form "service@domain", a particular relay unit could handle all services addresses associated with a particular domain. For example, a particular relay unit handling the domain "nokiadatacasting.com" might receive and process messages bearing service addresses in the form of "service@nokiadatacasting.com", including perhaps "sports@nokiadatacasting.com", "weather@nokiadatacasting.com", and "movies@nokiadatacasting.com". Alternately, a particular relay unit might handle services associated with different domains.

### Network Arrangement

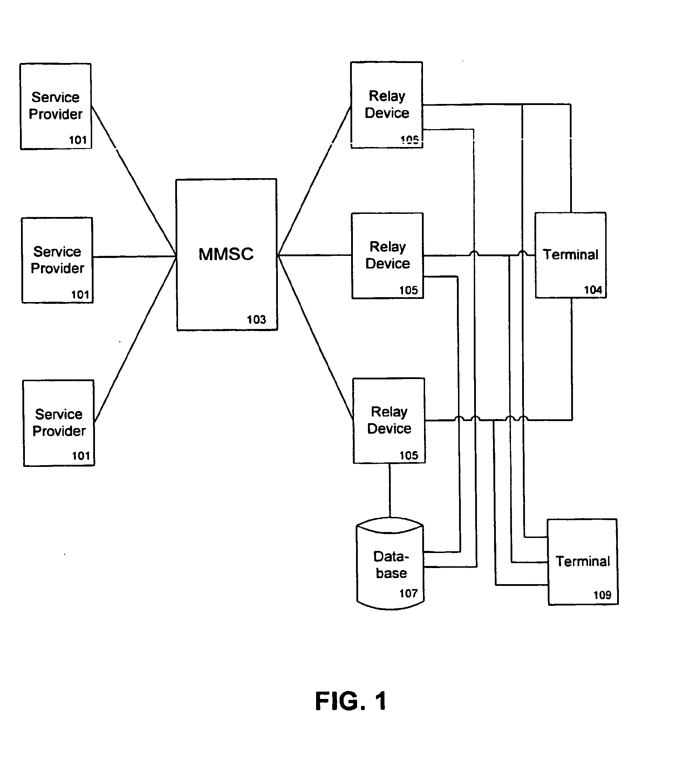

Shown in Fig. 1 is an exemplary network arrangement according to embodiments of the present invention.

MMSC (MMS center) 103 may act to store MMS messages, and to deliver them to their corresponding recipients when those recipients are willing and/or able to receive the messages. The MMSC may receive both MMS messages intended for single recipients and MMS messages intended for multicast delivery to perhaps a multitude of recipients and/or addressed to a multitude of multicast MMS services.

A service provider device 101 may act to dispatch one or more messages directed to one or more services addresses. Each such message may be received, stored, and forwarded by MMSC 103 to the relay unit 105 associated with the services address to which the message is directed. Upon receipt of the message, the relay unit may, as alluded to above, act to determine the multicast address associated with the services address.

The relay unit may make this determination, for example, by consulting database 107. Database 107 could be, as is illustrated in Fig. 1, a centralized database that is accessible by a multitude of relay units. Such a database could correlate services addresses with multicast addresses. In alternate embodiments, each relay unit could have its own database 107 correlating services addresses with multicast addresses.

Once a relay unit has determined the multicast address corresponding to a services address, it could consult a database in order to determine the multicast delivery method that should be employed to deliver the message or messages being processed. Such multicast delivery methods will be described in more detail below. Next, the relay unit could perform multicast delivery in accordance with the determination. Consequently, the message or messages being processed could be received by one or more terminals 109 that receive transmissions directed to the multicast address associated with the message or messages. For example, a terminal 109 might act to learn which transmissions to listen to, perhaps in response to a user dynamically selecting multicast MMS services via an interface associated with the terminal.

The database consulted to determine delivery method could be the same database consulted to determine multicast addresses or could be a separate database. In certain embodiments, a message could include a specification of the multicast delivery method that should be employed in its delivery. In such embodiments, consultation of a database to learn multicast delivery method might be unnecessary. Databases could be maintained by a system administrator or the like. "System administrator", as used herein, may refer to an individual, company, computer or the like. The choice of multicast address and/or distribution method for a particular services address could be made, for example, by a system administrator and/or the content provider that would make use of the services address for MMS message distribution.

Various aspects of the invention will now be described in greater detail.

### Service Provision

A service provider wishing to distribute MMS messages in accordance with the present invention might first request that one or more services addresses be established.. In certain embodiments, this request might be directed towards a system administrator or the like. In the request, the service provider might specify a number of messaging addresses, email addresses, MINs, MDNs, unicast IP addresses, or the like that were desired to function as services addresses. In response, one or more multicast addresses could be associated with each messaging address or the like so submitted. The multicast addresses could be, for example, multicast IP addresses.

In certain embodiments, a service provider's request might not include a messaging address or the like. In such embodiments, a system administrator or the like might respond to the request by first choosing and/or establishing one or more messaging addresses or the like, and then associating with each messaging address or the like so chosen and/or established a multicast address. It is noted that instead of a messaging address or the like being established and associated with a multicast address, a multicast address could play the role of a messaging address or the like. In such embodiments, senders and/or receivers might not need to perform resolutions between multicast addresses and messaging addresses or the like.

It certain cases, a service's providers request not including a messaging address or the like might include some indication as to the name and/or types of desired services addresses. For example, a service provider "hypotheticalinfocenter.com" might specify that two services addresses are desired, that the services addresses should be messaging address-type services addresses, and that the desired names are "sports" and "news". In response, the system administrator or the like receiving the request might establish the messaging addressees "sports@hpyotheticalinfocenter.com" and "news@hypotheticalinfocenter.com", and associate them with multicast addresses. In the case where a system administrator is unable to secure the name and/or type requested by a service provider, the system administrator could inform the service provider of this fact and request that alternate types and/or names be submitted. It is noted that in certain embodiments a service provider request not including a messaging address or the like might also fail to include a suggested name and/or type. In such cases, the system administrator could respond by choosing a name and/or type, by requesting that the service provider suggest a name and/or type, or by offering to the service provider a number of available service addresses or the like and asking that one be chosen

After making necessary multicast address associations, a system administrator or the like could take steps to have one or more relay devices informed of the associations. The system administrator could achieve this, for example, by sending out a message to the one or more relay devices. In certain cases, the system administrator might submit the message to a process that periodically informed relay devices of associations between messaging addresses or the like and multicast addresses.

The system administrator of the like might additionally take steps to inform the requesting service provider of the established multicast associations or allocations. In the case where responding to the service provider's request required the choosing and/or establishment of a messaging address, the message could further specify the name and/or type of the messaging address so established.

When the requesting service provider wished to distribute a particular MMS message in accordance with the present invention, the service provider could direct the message to the appropriate services address. This could result in the message arriving at the relay device responsible for handling the messaging service associated with the address. For example, the service provider "hypotheticalinfocenter.com" might choose to distribute, via the messaging service associated with the services address "sports@ hypotheticalinfocenter.com", a film clip including voice commentary, of a home run hit in a regional baseball game.

As will be described in greater detail below, a number of methods may be available for the delivery of MMS messages. Accordingly, a service provider directing a MMS message to a services address might include with the message an indication of how the message should be distributed. In certain embodiments, instead of including such indications with messages, a service provider might specify that all messages relating to a particular messaging service should be distributed in a certain way. The service provider might indicate this, for example, to a system administrator who would in turn inform the appropriate relay devices.

### Relay Device Operations

As noted above, a relay device receiving a MMS message addressed to a service address may take steps to determine the multicast address corresponding to the service address and the delivery method that should be employed. In accordance with the present invention, a number of methods may be available for the delivery of MMS messages. Three such delivery methods will now be described.

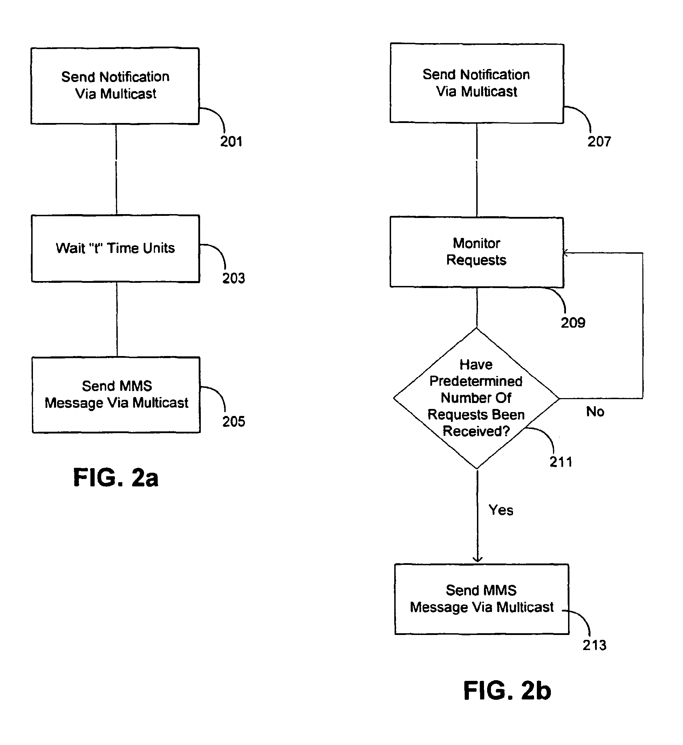

As illustrated in Fig. 2a, according to a first delivery method, the relay device could first send, via multicast to the determined multicast address, a notification that a MMS message was available (step 201). In certain embodiments the notification could include an indication that the MMS message would follow automatically, the indication perhaps additionally specifying the time at which the message would follow. The notification could also include an indication of the content of the message. For example, the indication might specify the size of the message, the type of message (e.g., video), and/or a synopsis of the message. The indication might also include a URL (universal resource locator) or other specification of the location from which the message itself may be requested.

Along with or a period of time "t" after transmission of the notification, the relay device could transmit, via multicast to the determined multicast address, the MMS message itself (steps 203, 205). In embodiments where the message is sent out after the notification (e.g., executing step 203 with t>0), the notification could include an indication of the time at which the message itself would be sent. As this delivery method does not require return responses from recipient terminals, it may be useful in environments where terminals lack return communications channels to relay devices and/or other entities, and in situations where return channels are available but there are cost, speed, and/or other advantages to avoiding their use. A return communications channel could employ, for example, GPRS or UMTS.

As illustrated in Fig. 2b, according to a second delivery method, the relay device may send, via multicast to the determined multicast address, a notification that a MMS message was available (step 207). The notification could include an indication that the MMS message would not necessarily follow automatically. Like the above-described notification, the notification could include an indication of the content of the message and a specification of the location from which the message itself may be requested.

Further according to this second delivery method, the relay device could watch for instances of terminals requesting reception of the message (step 209). The relay device could do this, for example, by monitoring for HTTP (hypertext transfer protocol) or WSP (wireless session protocol) GET requests directed to the location specified in the notification. Upon noting a predetermined number of such requests (step 211), the relay device could transmit, via multicast to the determined multicast address, the MMS message itself (step 213). In some embodiments, the relay device might first transmit the message to a second device which would be responsible for multicasting the message.

In certain embodiments, the relay device might send out the message more than once. More specifically, if subsequent to a particular multicast transmission of the message the relay device received more than a predetermined threshold number of additional requests for the message, the relay device might retransmit the message.

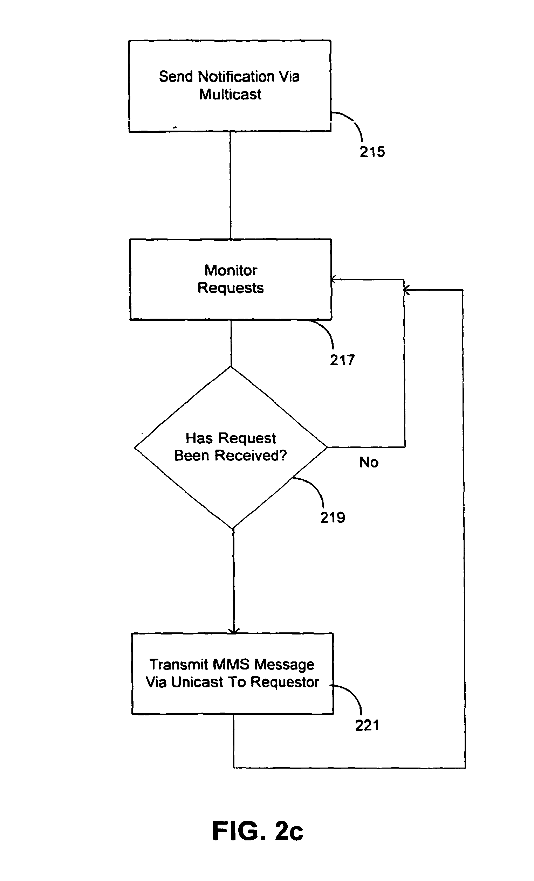

As illustrated in Fig. 2c, according to a third delivery method, the relay device could send, via multicast, a notification that a MMS message was available (step 215). The notification could include an indication that the MMS message would not follow automatically. Like the above-described notifications, the notification could include an indication and/or of the content of the message and a specification of the location from which the message itself could be requested.

In the case where the specified retrieval location was not under the control of the relay device, the relay device could transmit the message to the server or the like associated with the location and instruct the server or the like to fulfill requests for the message in a unicast manner. As a specific example, the server or the like could be instructed to, upon receipt of an HTTP or WSP GET request for a MMS message or the like, to respond by sending to the requestor an HTTP or WSP "200 OK" message, the message including the requested message or the like.

In the case where the specified location from which the message itself could be requested was under the control of the relay device, the relay device might send out the message via unicast to each terminal that requested it (steps 217-221).

It is noted that, in certain embodiments, a MMS message may be addressed to more than one service address. In the case where a relay device receives a MMS message addressed to more than one services address it bears responsibility for, it could determine for each service address the corresponding multicast address and multicast delivery mode. Accordingly, multiple copies of a message to be multicast could be sent, each perhaps dispatched via a different transport mechanism.

The exemplary delivery methods described with reference to Figs. 2a-2c each performed the dispatching of a notification that an MMS message was available. However, it is noted that, in certain embodiments, no delivery and/or receipt of notifications may be necessary. For instance, a terminal could receive an MMS message and store that message in its cache. In response to the reception, the terminal could generate a "local notification" corresponding to the message. The notification could be associated with a pointer or the like pointing to the cache. The terminal could make this notification available to, for instance, the user of the terminal and/or certain software running on the terminal. The MMS message could then be retrieved from and/or deleted from the cache as appropriate.

It is noted that a number of multicast transmission techniques could be employed in the procedures described above. For example, IP multicast or another network-layer multicast technique could be used. Thus MMS messages, notifications, and the like might be transmitted via IP multicast in a DVB system supporting encapsulation of IP packets within DVB packets.

It is further noted that, according to embodiments of the invention, a notification could be dispatched after dispatching the corresponding message. Additionally, it is noted that a notification and corresponding MMS message, as described in various embodiments and illustrative examples herein, could be delivered as two distinct messages (e.g., two separate messages corresponding two separate transmissions). Alternately, a notification and corresponding MMS message might be delivered as a single message containing two logical messages.

### Terminal Operations

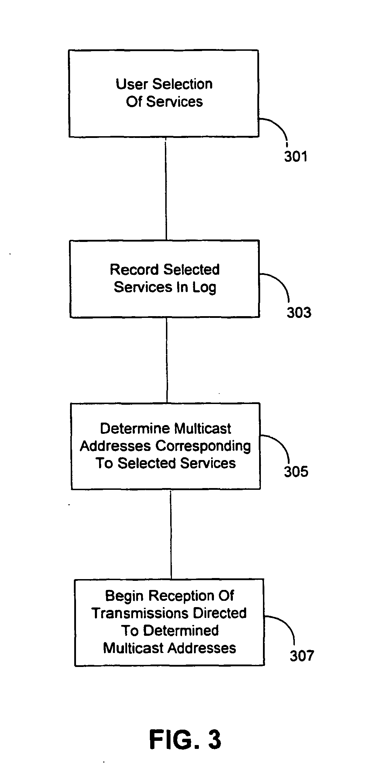

As shown in Fig. 3, a user wishing to receive MMS messages in accordance with the present invention may first select messaging services that she wishes her terminal to subscribe to and/or services addresses that she wishes her terminal to be associated with (step 301). The user may do this, for example, using her terminal. For instance, the user's terminal might display a menu from which she could select from available messaging services and/or services addresses. The terminal could be aware of available messaging services and/or services addresses, for example, by contacting a central server and/or by receiving periodically-transmitted messages from a central server indicating available messaging services and/or services addresses. The periodically-transmitted messages could be transmitted, for instance, via broadcast, multicast, or unicast. It is further noted that the periodically-transmitted messages could be, for example, push-type messages.

For each selected messaging service and/or services address, the terminal could record the selection in a log (step 303) and determine the corresponding multicast address (step 305). This could be accomplished in a number of ways. For example, indications of multicast addresses could be included in the above-noted periodically-transmitted messages, or could be included in responses resulting from the above-noted central server queries. Alternately, separate periodically-transmitted messages indicating multicast addresses could be received and/or separate server queries could be made.

Having identified the multicast addresses, the terminal could take steps to receive transmissions directed to these addresses (step 307). The terminal could do this, for example, by adopting these addresses and/or joining the corresponding multicast groups. In the case where IP multicast is employed in a DVB transmission environment, the terminal could perform necessary IP-DVB address translation and tuning operations. It is noted that no multicast join command or the like might be transmitted by a terminal over a network, for example, in cases where the terminal lacks and/or does not use a return communications channel.

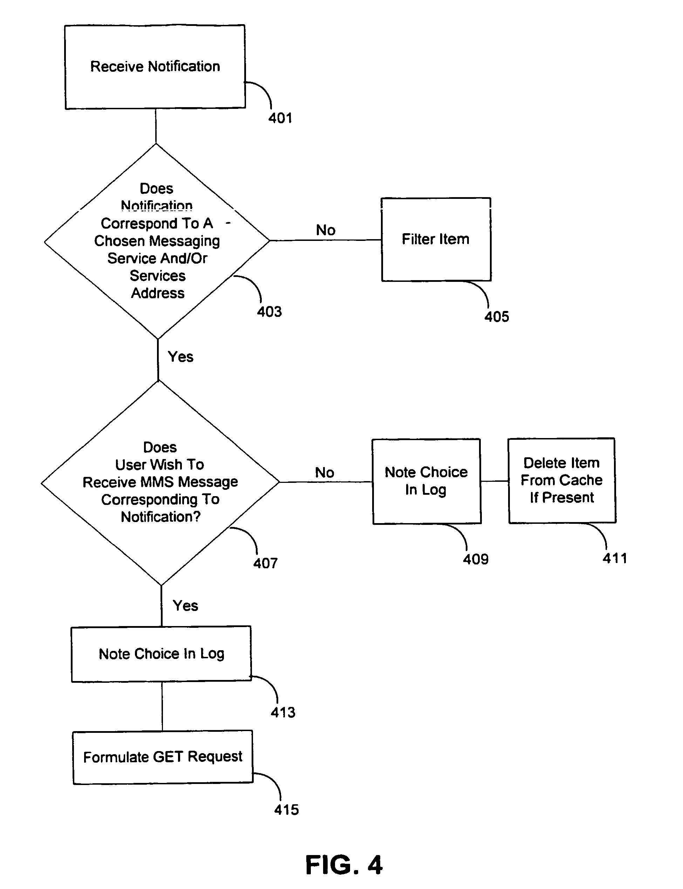

As noted above, a relay device may dispatch to a multicast address a notification corresponding to a MMS message. As shown in Fig. 4 a terminal, upon receipt of a notification addressed to an adopted multicast address, may determine if the notification corresponded to a messaging service and/or services address that the terminal had associated itself with (steps 401, 403). The terminal might achieve this, for example, by searching the above-noted log for the messaging service and/or services address associated with the received notification. In certain embodiments, the terminal could know of the messaging service and/or services address associated with a received item by way of an indication included with the received notification. Such an indication may be included, for example, in one or more of the headers of the packets comprising the notification.

In the case where the notification was determined to not be associated with a messaging service and/or services address selected by the terminal's user, the terminal could take steps to filter out the notification (step 405). Such functionality may be useful for embodiments where a multicast address is shared by two or more messaging services and/or services addresses.

In the case where the notification was fully received at the terminal before the decision to filter out was made, the terminal might delete the notification from the store or stores into which it was initially received and/or placed. On the other hand, if only a portion of the notification was received (e.g., only certain packets thereof), the terminal could act to delete any portions stored and to not save further incoming portions.

In the case where it has determined not to filter out a received notification, the terminal could take steps to see if its user wished to receive the MMS message associated with the notification (step 407). The terminal could do this, for example, by presenting to its user a GUI (graphical user interface) dialog box posing the question and including buttons for "yes" and "no".

In the case where the user answered "no", the terminal could make a notation of this choice in a log (step 409). The terminal could additionally act to see if the message was in the terminal's cache. If it was, the terminal might act to delete the item from the cache (step 411). In the case where the user answered "yes", the terminal could make a notation of this choice in a log (step 413) and formulate an HTTP or WSP GET directed to the location specified in the notification (step 415). In certain embodiments of the invention, the GET request might be first directed to the terminal's cache. If the item was found to be in the cache, the terminal could tell its user that the message was available, and might additionally ask the user if she wished to view it at that time. Alternately, the terminal might automatically display the message instead without querying the user.

It is noted that, in the case where a message was in the cache, the GET request might not be transmitted by the terminal over a network to which it was connected. It is further noted that the GET request might not be dispatched outside of the terminal in the case where the notification had specified that the message would follow automatically, and/or in the case where the terminal lacked a return communications channel. A terminal may lack a return communications channel, for example, if the terminal lacked the necessary hardware, if the necessary network infrastructure was unavailable, and/or if its user or another entity had determined that the return channel should not be used. Such a determination might be made, for example, based on monetary cost. Conditions under which a message corresponding to a notification might, at the time a user decided whether or not she wished to receive the message, already be in a terminal's cache will be described in greater detail below.

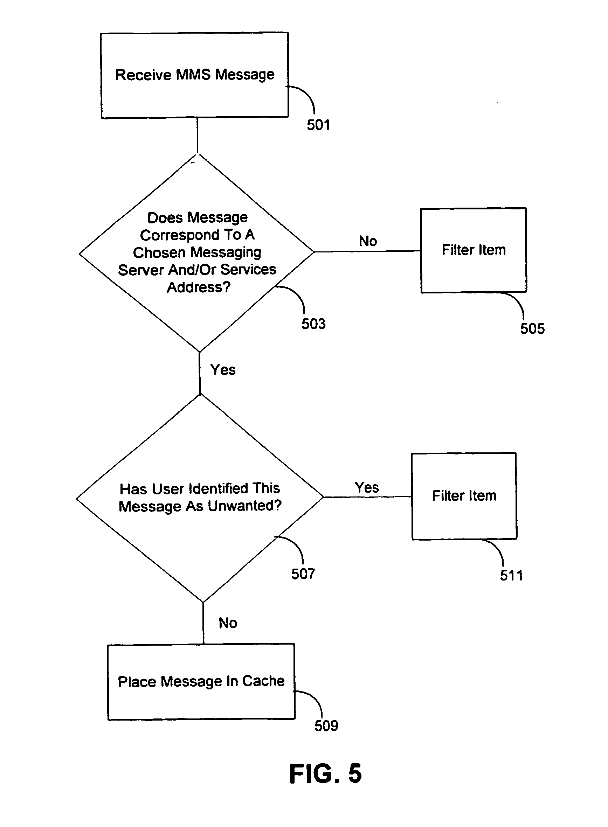

As illustrated in Fig. 5, upon receipt of a MMS message addressed to an adopted multicast address (step 501), a terminal may act, in a manner analogous to that described above with reference to a received notification, to filter out the received message if it was found to not correspond to a messaging service and/or services address that the terminal has associated itself with (steps 503, 505). In a manner also analogous to that described above with reference to a received notification, the terminal could know of the messaging service and/or services address associated with a received MMS message by way of an indication included with the received item. Like above, such functionality may be useful for embodiments where a multicast address is shared by two or more messaging services and/or services addresses.

In the case where the message is determined to be associated with a messaging service and/or services address selected by the terminal's user, the terminal could take steps to determine if its user had identified the message as one that she did not wish to receive (steps 503, 507). This terminal could achieve this, for example, by consulting the above-noted log.

In the case where the item was found to not be identified by the user as unwanted, the item could be copied to the terminal's cache from the store or stores into which it was initially received and/or placed (step 509). If the item was found, in addition to not being specified as unwanted, to be identified by the user as desired, the user might additionally be notified of item's arrival. Under such circumstances, the terminal might perform the further operation of presenting the message, perhaps querying the user before presentation.

In the case where the item was found to be identified by the user as unwanted, the terminal could take steps to filter out the item (step 511). In the case where the message had been fully received at the terminal at the time that the terminal recognized it as one unwanted by the user, the terminal might delete the message from the store or stores into which it was initially received and/or placed. On the other hand, if only a portion of the notification was received (e.g., only certain packets thereof), the terminal could act to delete any portions stored and to not save further incoming portions.

It is noted that the operations discussed with reference to Fig. 4 need not be performed prior to the operations discussed with reference to Fig. 5. Indeed, the operations discussed with reference to Fig. 4 could be performed before, at the same time, or after the operations discussed with reference to Fig. 5.

As alluded to above, the message corresponding to a notification may arrive at a terminal at the same time as, prior to, or after, the arrival of the notification. For at least this reason, a terminal may perform the operations discussed with reference to Fig. 4 at the same time as the operations discussed with reference to Fig. 5.

As an example of a scenario wherein the operations discussed with reference to Fig. 4 might not be performed before those discussed with reference to Fig. 5, it is noted that, as indicated above, a notification may be generated locally by a terminal in response to a received message.

As indicated above, an MMS message may be placed in a terminal's cache in the case where its user has neither identified the message as unwanted or as desired. Such a situation may occur, for example, if a MMS message arrived at a point in time where the terminal's user had not answered the terminal's query as to whether the message was unwanted or desired. As further indicated above, if the user subsequently indicated that the message was unwanted, the terminal might act to delete the message from the cache. It is noted that in certain embodiments a terminal might further delete such an MMS message from its cache if a predetermined amount of time passed wherein the user had neither identified the message as unwanted or as desired.

### Hardware and Software

Certain devices employed in accordance with the present invention may be implemented using computers. For example, the above-noted service provider devices, MMSC, relay devices, and terminals may be implemented using network-capable computers. Furthermore, certain procedures and the like described herein may be executed by or with the help of computers. The phrases "computer", "general purpose computer", and the like, as used herein, refer but are not limited to a processor card smart card, a media device, a personal computer, an engineering workstation, a PC, a Macintosh, a PDA, a wired or wireless terminal, a server, a network access point, or the like, perhaps running an operating system such as OS X, Linux, Darwin, Windows CE, Windows XP, Palm OS, Symbian OS, or the like, perhaps with support for Java or .Net.

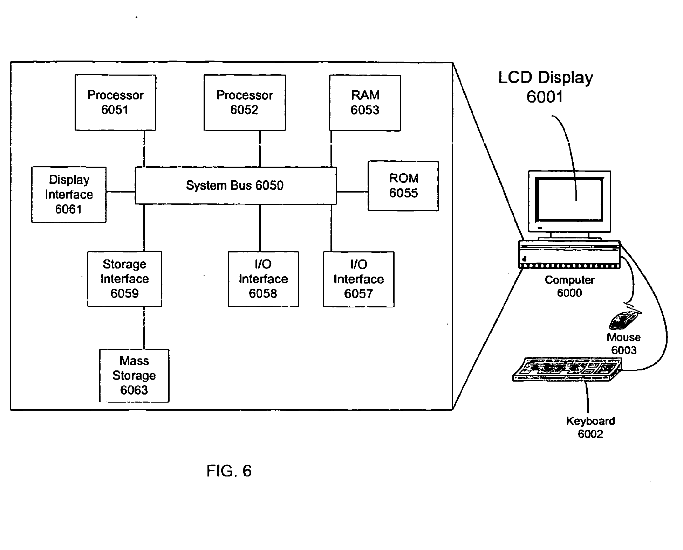

The phrases "general purpose computer", "computer", and the like also refer, but are not limited to, one or more processors operatively connected to one or more memory or storage units, wherein the memory or storage may contain data, algorithms, and/or program code, and the processor or processors may execute the program code and/or manipulate the program code, data, and/or algorithms. Accordingly, exemplary computer 6000 as shown in Fig. 6 includes system bus 6050 which operatively connects two processors 6051 and 6052, random access memory (RAM) 6053, read-only memory (ROM) 6055, input output (I/O) interfaces 6057 and 6058, storage interface 6059, and display interface 6061. Storage interface 6059 in turn connects to mass storage 6063. Each of I/O interfaces 6057 and 6058 may be an Ethernet, IEEE 1394, IEEE 802.11b, Bluetooth, DVB-T, DVB-S, DAB, GPRS, UMTS, or other interface known in the art. Mass storage 6063 may be a hard drive, optical drive, or the like. Processors 6057 and 6058 may each be a commonly known processor such as an IBM or Motorola PowerPC, an AMD Athlon, an AMD Hammer, an Intel StrongARM, or an Intel Pentium. Computer 6000 as shown in this example also includes an LCD display unit 6001, a keyboard 6002 and a mouse 6003. In alternate embodiments, keyboard 6002 and/or mouse 6003 might be replaced with a touch screen, pen, or keypad interface. Computer 6000 may additionally include or be attached to card readers, DVD drives, or floppy disk drives whereby media containing program code may be inserted for the purpose of loading the code onto the computer.

In accordance with the present invention, a computer may run one or more software modules designed to perform one or more of the above-described operations, the modules being programmed using a language such as Java, Objective C, C, C#, or C++ according to methods known in the art.

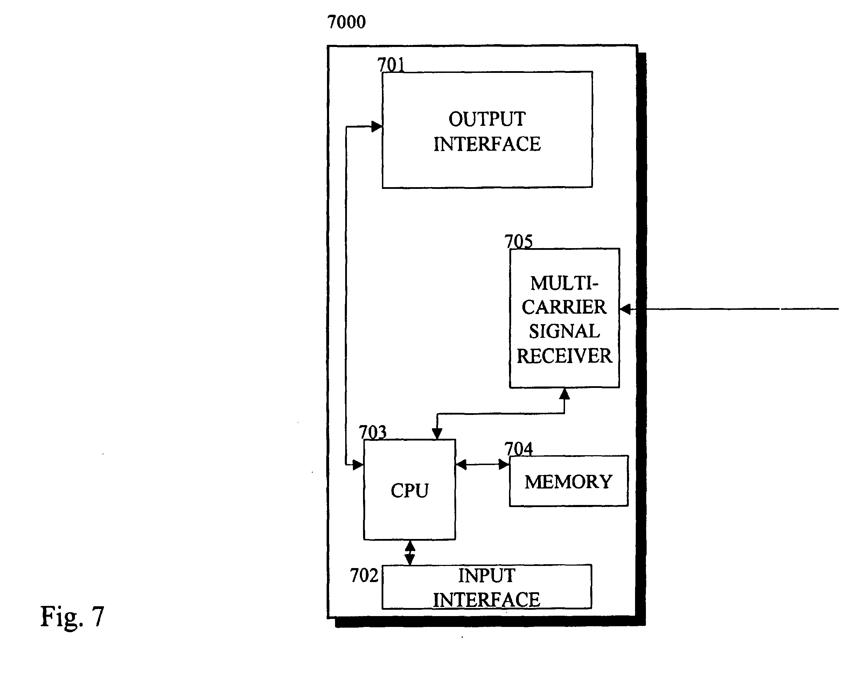

Shown in Fig. 7 is a functional block diagram of an exemplary terminal employable in various embodiments of the present invention. The terminal of Fig. 7 has been discussed in the foregoing. In the following, corresponding reference signs have been applied to corresponding parts. Terminal 7000 of Fig. 7 may be used in any/all of the embodiments described herein. The terminal 7000 comprises a processing unit CPU 703, a multi-carrier signal terminal part 705 and a user interface (701, 702). The multi-carrier signal terminal part 705 and the user interface (701, 702) are coupled with the processing unit CPU 703. The user interface (701, 702) comprises a display and a keyboard to enable a user to use the terminal 7000. In addition, the user interface (701, 702) comprises a microphone and a speaker for receiving and producing audio signals. The user interface (701, 702) may also comprise voice recognition (not shown).

The processing unit CPU 703 comprises a microprocessor (not shown), memory 704 and possibly software . The software can be stored in the memory 704. The microprocessor controls, on the basis of the software, the operation of the terminal 7000, such as the receiving of the data stream, the tolerance of the impulse burst noise in the data reception, displaying output in the user interface and the reading of inputs received from the user interface . The operations are described above. The hardware contains circuitry for detecting the signal, circuitry for demodulation, circuitry for detecting the impulse, circuitry for blanking those samples of the symbol where significant amount of impulse noise is present, circuitry for calculating estimates, and circuitry for performing the corrections of the corrupted data.

Still referring to Figure 7, alternatively, middleware or software implementation can be applied. The terminal 7000 can be a hand-held device which the user can comfortably carry. Advantageously, the terminal 7000 can be a cellular mobile phone which comprises the multi-carrier signal terminal part 705 for receiving the broadcast transmission stream. Therefore, the terminal 7000 may possibly interact with the service providers.

### Ramifications and Scope

Although the description above contains many specifics, these are merely provided to illustrate the invention and should not be construed as limitations of the invention's scope. Thus it will be apparent to those skilled in the art that various modifications and variations can be made in the system and processes of the present invention without departing from the scope of the invention as defined by the claims.

## Claims

1. A method for multicasting a message, comprising:
receiving at a device (105) a message directed towards a first address;
determining a second address corresponding to said first address; and multicasting said message to said second address;
**characterised by:**
said message being a multimedia messaging service message;
said first address being a particular services address; and
said second address being a multicast network address.

2. The method of claim 1 wherein said services address is a messaging address.

3. The method of claim 1 wherein said services address is an email address.

4. The method of claim 1 wherein said services address is a mobile identification number.

5. The method of claim 1 wherein said services address is a mobile directory number.

6. The method of claim 1 wherein said services address is a unicast internet protocol address.

7. The method of claim 1 wherein said services address is a multicast internet protocol address.

8. The method of claim 6 wherein the unicast internet protocol address is an internet protocol version 4 address.

9. The method of claim 6 wherein the unicast internet protocol address is an internet protocol version 6 address.

10. The method of claim 7 wherein the multicast internet protocol address is an internet protocol version 4 address.

11. The method of claim 7 wherein the multicast internet protocol address is an internet protocol version 6 address.

12. The method of any of the preceding claims, wherein said multicast network address is an internet protocol multicast address.

13. The method of any of claims 1 to 11, wherein said multicast network address is digital video broadcast related.

14. The method of any preceding claim, further comprising:
multicasting to said multicast address a notification of the availability of said message,
wherein the multicasting of said message is not performed in response to a received request for said message.

15. The method of claim 14, wherein said notification includes an indication of the remote location from which said message may be requested.

16. A method for receiving a multicasted multimedia messaging service message, comprising:
determining, for each of one or more selected services addresses, a multicast address;
receiving a multimedia messaging service message directed to at least one of the determined multicast addresses;
ascertaining if said message is associated with at least one of the selected services addresses; and
in the case where said message is ascertained to be associated with at least one of the selected services addresses, allowing said message to be consumed by a user.

17. The method of claim 16 wherein the selected services addresses comprise messaging addresses.

18. The method of claim 16 wherein the selected services addresses comprise email addresses.

19. The method of claim 16 wherein the selected services addresses comprise mobile identification numbers.

20. The method of claim 16 wherein the selected services addresses comprise mobile directory numbers.

21. The method of claim 16 wherein the selected services addresses comprise unicast internet protocol addresses.

22. The method of claim 16 wherein the selected services addresses comprise multicast internet protocol addresses

23. The method of claim 21 wherein the unicast internet protocol addresses are internet protocol version 4 addresses.

24. The method of claim 21 wherein the unicast internet protocol addresses are internet protocol version 6 addresses.

25. The method of claim 22 wherein the multicast internet protocol addresses are internet protocol version 4 addresses.

26. The method of claim 22 wherein the multicast internet protocol addresses are internet protocol version 6 addresses.

27. The method of any of claims 16 to 26, wherein the determined multicast network addresses comprise internet protocol multicast addresses.

28. The method of any of claims 16 to 26, wherein the determined multicast network addresses are digital video broadcast related.

29. The method of any of claims 16 to 28, further comprising:
receiving a notification of the availability of said message, the notification directed to at least one of the determined multicast addresses,
wherein no request for said message is dispatched.

30. The method of claim 29, wherein said notification includes an indication of the remote location from which said message may be requested.

31. A system (6000) for multicasting a message, comprising:
a memory (6053, 6055) having program code stored therein; and
a processor (6051, 6052) operatively connected to said memory (6053, 6055) for carrying out instructions in accordance with said stored program code;
wherein said program code; when executed by said processor (6051, 6052), cases said processor (6051, 6052) to perform the steps of :
receiving a message directed towards a first address;
determining a second address corresponding to said first address; and
multicasting said message to said second address;
**characterised by:**
said message being a multimedia messaging service message;
said first address being a particular services address; and
said second address being a multicast network address..

32. A system (7000) for receiving a multicasted multimedia messaging service message, comprising:
a memory (704) having program code stored therein; and
a processor (703) operatively connected to said memory (704) for carrying out instructions in accordance with said stored program code;
wherein said program code, when executed by said processor (703), causes said processor (703) to perform the steps of:
determining, for each of one or more selected services addresses, a multicast address;
receiving a multimedia messaging service message directed to at least one of the determined multicast addresses;
ascertaining if said message is associated with at least one of the selected services addresses; and
in the case where said message is ascertained to be associated with at least one of the selected services addresses, allowing said message to be consumed by a user.

## Patentansprüche

1. Verfahren zum Mehrfachsenden einer Nachricht, welches umfasst:
Empfangen an einer Vorrichtung (105) einer an eine erste Adresse gerichteten Nachricht;
Bestimmen einer zweiten Adresse, die der ersten Adresse entspricht; und Mehrfachsenden der Nachricht an die zweite Nachricht;
**dadurch gekennzeichnet, dass:**
die Nachricht eine Multimedianachrichtendienstnachricht ist;
die erste Adresse eine spezielle Diensteadresse ist; und
die zweite Adresse eine Mehrfachsende-Netzadresse ist.

2. Verfahren gemäß Anspruch 1, wobei die Diensteadresse eine Nachrichtenadresse ist.

3. Verfahren gemäß Anspruch 1, wobei die Diensteadresse eine Email-Adresse ist.

4. Verfahren gemäß Anspruch 1, wobei die Diensteadresse eine mobile Identifikationsnummer ist.

5. Verfahren gemäß Anspruch 1, wobei die Diensteadresse eine mobile Verzeichnisnummer ist.

6. Verfahren gemäß Anspruch 1, wobei die Diensteadresse eine Einfachsende-Internetprotokolladresse ist.

7. Verfahren gemäß Anspruch 1, wobei die Diensteadresse eine Mehrfachsende-Internetprotokolladresse ist.

8. Verfahren gemäß Anspruch 6, wobei die Einfachsende-Internetprotokolladresse eine Adresse der Version 4 des Internetprotokolls ist.

9. Verfahren gemäß Anspruch 6, wobei die Einfachsende-Internetprotokolladresse eine Adresse der Version 6 des Internetprotokolls ist.

10. Verfahren gemäß Anspruch 7, wobei die Mehrfachsende-Internetprotokolladresse eine Adresse der Version 4 des Internetprotokolls ist.

11. Verfahren gemäß Anspruch 7, wobei die Mehrfachsende-Internetprotokolladresse eine Adresse der Version 6 des Internetprotokolls ist.

12. Verfahren gemäß einem der vorhergehenden Ansprüche, wobei die Mehrfachsende-Netzadresse eine Mehrfachsende-Adresse des Internetprotokolls ist.

13. Verfahren gemäß einem der Ansprüche 1 bis 11, wobei sich die Mehrfachsende-Netzadresse auf digitalen Videorundfunk bezieht.

14. Verfahren gemäß einem der vorhergehenden Ansprüche, welches ferner umfasst:
Mehrfachsenden an die Mehrfachsende-Adresse einer Benachrichtigung über die Verfügbarkeit der Nachricht,
wobei das Mehrfachsenden der Nachricht nicht in Reaktion auf eine empfangene Anforderung der Nachricht durchgeführt wird.

15. Verfahren gemäß Anspruch 14, wobei die Benachrichtigung eine Angabe des entfernten Orts umfasst, von dem aus die Nachricht angefordert werden kann.

16. Verfahren zum Empfangen einer mehrfachgesendeten
Multimedianachrichtendienstnachricht, welches umfassst:
Bestimmen, für jede der einen oder mehreren ausgewählten Diensteadressen, einer Mehrfachsende-Adresse;
Empfangen einer Multimedianachrichtendienstnachricht, die an wenigstens eine der bestimmten Mehrfachsende-Adressen gerichtet ist;
Feststellen, ob der Nachricht wenigstens eine der ausgewählten Diensteadressen beigeordnet ist; und
in dem Fall, in dem festgestellt wird, dass der Nachricht wenigstens eine der ausgewählten Diensteadressen beigeordnet ist, der Nachricht gestatten, von einem Benutzer konsumiert zu werden.

17. Verfahren gemäß Anspruch 16, wobei die ausgewählten Diensteadressen Nachrichtenadressen umfassen.

18. Verfahren gemäß Anspruch 16, wobei die ausgewählten Diensteadressen Email-Adressen umfassen.

19. Verfahren gemäß Anspruch 16, wobei die ausgewählten Diensteadressen mobile Identifikationsnummern umfassen.

20. Verfahren gemäß Anspruch 16, wobei die ausgewählten Diensteadressen mobile Verzeichnisnummern umfassen.

21. Verfahren gemäß Anspruch 16, wobei die ausgewählten Diensteadressen Einfachsende-Internetprotokolladressen umfassen.

22. Verfahren gemäß Anspruch 16, wobei die ausgewählten Diensteadressen Mehrfachsende-Internetprotokolladressen umfassen.

23. Verfahren gemäß Anspruch 21, wobei die Einfachsende-Internetprotokolladressen Adressen der Version 4 des Internetprotokolls sind.

24. Verfahren gemäß Anspruch 21, wobei die Einfachsende-Internetprotokolladressen Adressen der Version 6 des Internetprotokolls sind.

25. Verfahren gemäß Anspruch 22, wobei die Mehrfachsende-Internetprotokolladressen Adressen der Version 4 des Internetprotokolls sind.

26. Verfahren gemäß Anspruch 22, wobei die Mehrfachsende-Internetprotokolladressen Adressen der Version 6 des Internetprotokolls sind.

27. Verfahren gemäß einem der Ansprüche 16 bis 26, wobei die bestimmten Mehrfachsende-Netzadressen Mehrfachsende-Adressen des Internetprotokolls umfassen.

28. Verfahren gemäß einem der Ansprüche 16 bis 26, wobei sich die bestimmten Mehrfach-Netzadressen auf digitalen Videorundfunk beziehen.

29. Verfahren gemäß einem der Ansprüche 16 bis 28, welches ferner umfasst:
Empfangen einer Benachrichtigung über die Verfügbarkeit der Nachricht,
wobei die Benachrichtigung an wenigstens eine der bestimmten Mehrfachsende-Adressen gerichtet ist,
wobei keine Anforderung der Nachricht abgeschickt wird.

30. Verfahren gemäß Anspruch 29, wobei die Benachrichtigung eine Angabe des entfernten Orts umfasst, von dem aus die Nachricht angefordert werden kann.

31. System (6000) zum Mehrfachsenden einer Nachricht, welches umfasst:
einen Speicher (6053, 6055), der darin gespeicherten Programmcode aufweist; und
einen Prozessor (6051, 6052), der betriebsbereit mit dem Speicher (6053, 6055) verbunden ist, zum Ausführen von Befehlen gemäß dem gespeicherten Programmcode;
wobei der Programmcode, wenn er von dem Prozessor (6051, 6052) ausgeführt wird, den Prozessor (6051, 6052) veranlasst, die Schritte durchzuführen:
Empfangen einer an eine erste Adresse gerichteten Nachricht;
Bestimmen einer zweiten Adresse, die der ersten Adresse entspricht; und
Mehrfachsenden der Nachricht an die zweite Adresse;
**dadurch gekennzeichnet, dass**
die Nachricht eine Multimedianachrichtendienstnachricht ist;
die erste Adresse eine spezielle Diensteadresse ist; und
die zweite Adresse eine Mehrfachsende-Netzadresse ist.

32. System (7000) zum Empfangen einer mehrfachgesendeten
Multimedianachrichtendienstnachricht, welches umfasst:
einen Speicher (704), der einen darin gespeicherten Programmcode aufweist; und
einen Prozessor (703), der betriebsbereit mit dem Speicher (704) verbunden ist, um Befehle gemäß dem gespeicherten Programmcode auszuführen;
wobei der Programmcode, wenn er von dem Prozessor (703) ausgeführt wird, veranlasst, dass der Prozessor (703) die Schritte durchführt:
Bestimmen, für jeden der ausgewählten Diensteadressen, einer Mehrfachsende-Adresse;
Empfangen einer Multimedianachrichtendienstnachricht, die an wenigstens eine der bestimmten Mehrfachsende-Adressen gerichtet ist;
Feststellen, ob der Nachricht wenigstens eine der ausgewählten Diensteadressen beigeordnet ist; und
in dem Fall, in dem festgestellt wird, dass der Nachricht wenigstens eine der ausgewählten Diensteadressen beigeordnet ist, der Nachricht gestatten, von einem Benutzer konsumiert zu werden.

## Revendications

1. Procédé pour réaliser un envoi multiple d'un message, comportant les étapes consistant à :
recevoir, au niveau d'un dispositif (105), un message acheminé vers une première adresse ;
déterminer une seconde adresse correspondant à ladite première adresse ; et
réaliser un envoi multiple dudit message à ladite seconde adresse ;
**caractérisé en ce que :**
ledit message est un message de services de messagerie multimédia ;
ladite première adresse est une adresse de services particulière ; et
ladite seconde adresse est une adresse de réseau à envoi multiple.

2. Procédé selon la revendication 1, dans lequel ladite adresse de services est une adresse de messagerie.

3. Procédé selon la revendication 1, dans lequel ladite adresse de services est une adresse de courriel.

4. Procédé selon la revendication 1, dans lequel ladite adresse de services est un numéro d'identification mobile.

5. Procédé selon la revendication 1, dans lequel ladite adresse de services est un numéro de répertoire mobile.

6. Procédé selon la revendication 1, dans lequel ladite adresse de services est une adresse de protocole internet à envoi individuel.

7. Procédé selon la revendication 1, dans lequel ladite adresse de services est une adresse de protocole internet à envoi multiple.

8. Procédé selon la revendication 6, dans lequel l'adresse de protocole internet à envoi individuel est une adresse de protocole internet de version 4.

9. Procédé selon la revendication 6, dans lequel l'adresse de protocole internet à envoi individuel est une adresse de protocole internet de version 6.

10. Procédé selon la revendication 7, dans lequel l'adresse de protocole internet à envoi multiple est une adresse de protocole internet de version 4.

11. Procédé selon la revendication 7 dans lequel l'adresse de protocole internet à envoi multiple est une adresse de protocole internet de version 6.

12. Procédé selon l'une quelconque des revendications précédentes, dans lequel ladite adresse de réseau à envoi multiple est une adresse de protocole internet à envoi multiple.

13. Procédé selon l'une quelconque des revendications 1 à 11, dans lequel ladite adresse de réseau à envoi multiple est relative à une diffusion vidéo numérique.

14. Procédé selon l'une quelconque des revendications précédentes, comportant en outre l'étape consistant à :
réaliser un envoi multiple à ladite adresse multi-destination d'une notification de la disponibilité du service de messagerie multimédia dudit message,
dans lequel l'envoi multiple dudit message n'est pas mis en oeuvre en réponse à une demande reçue pour ledit message.

15. Procédé selon la revendication 14, dans lequel ladite notification comporte une indication de l'emplacement distant à partir duquel ledit message peut être demandé.

16. Procédé pour recevoir un message multi-destination de services de messagerie multimédia, comportant les étapes consistant à :
déterminer, pour chacune parmi une ou plusieurs adresses de services sélectionnées, une adresse multi-destination ;
recevoir un message de service de messagerie multimédia destiné à au moins l'une des adresses multi-destination déterminées ;
déterminer avec certitude si ledit message est associé à au moins l'une des adresses de services sélectionnées, et
dans le cas où ledit message est déterminé comme étant associé à au moins l'une des adresses de services sélectionnées, permettre audit message d'être utilisé par un utilisateur.

17. Procédé selon la revendication 16, dans lequel les adresses de services sélectionnées comportent des adresses de messagerie.

18. Procédé selon la revendication 16, dans lequel les adresses de services sélectionnées comportent des adresses de courriel.

19. Procédé selon la revendication 16, dans lequel les adresses de services sélectionnées comportent des numéros d'identification mobile.

20. Procédé selon la revendication 16, dans lequel les adresses de services sélectionnées comportent des numéros de répertoire mobile.

21. Procédé selon la revendication 16, dans lequel les adresses de services sélectionnées comportent des adresses de protocole internet à envoi individuel.

22. Procédé selon la revendication 16, dans lequel les adresses de services sélectionnées comportent des adresses de protocole internet à envoi multiple.

23. Procédé selon la revendication 21, dans lequel les adresses de protocole internet à envoi individuel sont des adresses de protocole internet de version 4.

24. Procédé selon la revendication 21, dans lequel les adresses de protocole internet à envoi individuel sont des adresses de protocole internet de version 6.

25. Procédé selon la revendication 22, dans lequel les adresses de protocole internet à envoi multiple sont des adresses de protocole internet de version 4.

26. Procédé selon la revendication 22, dans lequel les adresses de protocole internet à envoi multiple sont des adresses de protocole internet de version 6.

27. Procédé selon l'une quelconque des revendications 16 à 26, dans lequel les adresses de réseau à envoi multiple déterminées comportent des adresses de protocole internet à envoi multiple.

28. Procédé selon l'une quelconque des revendications 16 à 26, dans lequel les adresses de réseau à envoi multiple déterminées sont relatives à une diffusion vidéo numérique.

29. Procédé selon l'une quelconque des revendications 16 à 28, comprenant en outre l'étape consistant à :
recevoir une notification de la disponibilité dudit message, la notification étant destinée à au moins l'une des adresses multi-destination déterminées,
où aucune demande pour ledit message n'est envoyée.

30. Procédé selon la revendication 29, dans lequel ladite notification comporte une indication de l'emplacement distant à partir duquel ledit message peut être demandé.

31. Système (6000) pour réaliser un envoi multiple d'un message, comprenant :
une mémoire (6053, 6055) présentant un code de programme stocké dans celle-ci ; et
un processeur (6051, 6052) connecté de façon fonctionnelle à ladite mémoire (6053, 6055) pour mettre en oeuvre des instructions, selon ledit code de programme stocké ;
dans lequel ledit code de programme, lorsqu'il est exécuté par ledit processeur (6051, 6052), force ledit processeur (6051, 6052) à mettre en oeuvre les étapes consistant à :
recevoir un message acheminé vers une première adresse ;
déterminer une seconde adresse correspondant à ladite première adresse, et
réaliser un envoi multiple dudit message à ladite seconde adresse ;
**caractérisé en ce que :**
ledit message est un message de services de messagerie multimédia ;
ladite première adresse est une adresse de services particulière ; et
ladite seconde adresse est une adresse de réseau à envoi multiple.

32. Système (7000) pour recevoir un message de services de messagerie multimédia à envoi multiple, comportant :
une mémoire (704) présentant un code de programme stocké dans celle-ci ; et
un processeur (703) connecté de façon fonctionnelle à ladite mémoire (704) pour mettre en oeuvre des instructions, selon ledit code de programme stocké ;
dans lequel ledit code de programme, lorsqu'il est exécuté par ledit processeur (703), force ledit processeur (703) à mettre en oeuvre les étapes consistant à :
déterminer, pour chacune parmi une ou plusieurs adresses de services sélectionnées, une adresse multi-destination ;
recevoir un message de service de messagerie multimédia destiné à au moins l'une des adresses multi-destination déterminées ;
déterminer avec certitude si ledit message est associé à au moins l'une des adresses de services sélectionnées, et
dans le cas où ledit message est déterminé comme étant associé à au moins l'une des adresses de services sélectionnées, permettre audit message d'être utilisé par un utilisateur.
